# EUROPEAN PATENT APPLICATION

(11) **EP 4 470 641 A1**
(43) Date of publication of application: **04.12.2024**
(21) Application number: 24178938.7
(22) Date of filing: 29.05.2024
(51) Int. Cl.: A63F 13/424, A63F 13/60

(54) **METHOD AND SYSTEM FOR GENERATING AN ANIMATION**

(30) Priority: 31.05.2023 GB 202308106
(71) Applicant: Sony Interactive Entertainment Europe Limited, London W1F 7LP (GB)
(72) Inventor: Michailidis, Lazaros, London, W1F 7LP (GB)
(74) Representative: Gill Jennings & Every LLP

(57) **Abstract**

A computer-implemented method for generating an animation for a gameplay event during gameplay, the method comprising: determining a gameplay event during gameplay; determining an audio signal, wherein the audio signal corresponds to the gameplay event; determining an audio property of the audio signal; generating an animation for the gameplay event based on the determined audio property of the audio signal; and outputting the audio signal and generated animation. This generates animations for gameplay events with a reduced usage of processing and memory resources.

## Description

### FIELD OF THE INVENTION

The following disclosure relates to the field of video game systems and methods, and provides a method and system for generating an animation for a gameplay event during gameplay.

### BACKGROUND

In computer animation, moving images are created using computer graphics. This involves designing, modelling, and manipulating virtual objects or characters in a digital environment to produce motion graphics. Computer animation can be used in a wide variety of applications, such as video games, scientific simulations, films, and television shows.

The process of computer animation typically involves several stages, including (but not limited to) modelling, rigging, animation, and rendering. Modelling is the creation of virtual objects or characters; while rigging involves adding a digital skeleton to the models in order to allow animators to move and pose them. Animation involves setting keyframes and using interpolation techniques to create movement and motion between the keyframes. Rendering generates the final output set of frames which can be played in sequence to provide the impression of continuous motion.

Despite the many advantages of computer animation, creating high-quality animations is a resource-intensive and time-consuming process that requires the animator to manually set and adjust keyframes. This is particularly difficult when creating realistic animations that convincingly capture the nuances of real-life movement and behaviour.

Video games and other virtual environments often require characters to act and react to their environment in an audio-visual capacity. For example, in a video game when a character receives damage there is typically an accompanying sound effect and corresponding animation that features multiple variants (e.g. taking damage from the left, right, front, back, above, below, taking light damage, taking heavy damage). A greater variety of sound effects and animations is typically desired in order to improve the video game (e.g. by increasing realism), however each of these variant animations needs to be individually created which is a laborious process.

Accordingly, there is a need for a more time and resource efficient for generating animations for video games.

### SUMMARY OF INVENTION

In a first aspect of the invention there is provided a computer-implemented method for generating an animation for a gameplay event during gameplay, the method comprising: determining a gameplay event during gameplay; determining an audio signal, wherein the audio signal corresponds to the gameplay event; determining an audio property of the audio signal; generating an animation for the gameplay event based on the determined audio property of the audio signal; and outputting the audio signal and generated animation.

A gameplay event is a change in the state of a video game application (herein video game) during gameplay, and often has an associated animation and audio signal. A gameplay event may take many different forms depending on the video game being run, and the current state of the video game. For example, the gameplay event might be the action of a character such as movement or swinging a sword. Further examples include impacts on a character or object, such as an axe striking a tree or a character being damaged - each of these events can be represented in-game by an animation and sound accompanying the animation. Other suitable gameplay events will be appreciated by the skilled person with the benefit of the present disclosure.

An audio signal is a digital representation of a sound. The audio signal corresponding to the gameplay event means that the audio signal is triggered by the gameplay event - the audio signal may be played back when the gameplay event occurs.

An audio property of the audio signal refers to an attribute or parameter of the audio signal. This may be a property of the audio waveform itself such as frequency, amplitude, timbre, duration, or decay time. Alternatively, or in addition, the audio property may be information describing the audio signal such as the localisation of the audio signal or the audio type. The audio type describes the type of gameplay event the audio signal corresponds to. Examples of audio types include movement, receiving damage, action etc. As such, the audio property may be determined from the audio signal waveform itself and/or from information associated with the audio signal such as metadata or a tag. The method may determine a plurality of audio properties of the audio signal and generate the animation based on the plurality of audio properties. In this way, the method may exploit inherent technical properties of the audio signal (such as the amplitude, frequency, duration, localisation etc) to generate an animation which visually corresponds to the audio signal and gameplay event.

The animation may be generated at run-time, i.e. during gameplay, meaning the animation is only generated when required for the gameplay event. The method does not require the animation to be pre-made and stored in memory, thereby saving memory resources and time creating unnecessary animation. The animation may be generated by modifying an existing animation to create a variant, for example by modifying an existing keyframe, or by creating the animation without an existing animation such as by generating the animation starting from a modelled object which has not been animated.

For example, the scene may be rendered using vertex animation, where the positions of the vertices that make up the polygons of the modelled object (i.e. the model) are computed according to a technique known as skinning. Typically the model has a skeleton associated with it - this is a set of bones which are represented as a position and orientation. The skinning calculations use the orientation of the bones along with information stored with the polygonal model (blend weights and indices) to calculate the position of each model vertex per frame. The animation is stored as a sequence of changes of orientation of each bone, relative to its base position. This is a function that takes animation time as a parameter and can calculate a position for each bone at every frame. The bone positions can be represented as keyframes, specific points in time where a bone is at an explicit position, combined with blending or interpolating the keyframe information either side at times in-between those keyframe times.

Different actions and events produce (or are associated with) different sounds. These may vary dramatically such as the sound and motion of mining with a pickaxe when compared to the sound and motion of a person walking; or may vary to lesser degrees such as the sound and motion of mining a hard rock with a pickaxe when compared to mining a soft rock with a pickaxe. The inventor has recognised that the different sounds associated with different actions can be exploited to facilitate the animation of these actions. In addition to reducing memory resources, the methods provide a greater level of audio-visual cohesion and fidelity.

It is foreseen that the methods disclosed herein are particularly advantageous during the development and playing of video games, where large numbers of different (but often related) animations are used, speeding up the development of animations to be associated with sound effects during the development of the video game since it overcomes the need for the animator to create new animations manually, however the methods may be applied to generating an animation in any virtual environment.

Typically, the audio signal is obtained from memory to be read and processed before being played so that no audio-visual desynchronisation occurs.

Preferably, the audio signal and generated animation are output simultaneously. That is, a time period over which the generated animation extends overlaps at least in part with a time period over which the audio signal extends.

Optionally, generating the animation comprises selecting a property of the animation, where the property of the animation comprises: duration of the animation, number of keyframes in the animation, timing of keyframes in the animation, and/or a property of a keyframe in the animation.

Properties of a keyframe in an animation include, but are not limited to, the number and type of objects within the keyframe, the size of the objects, the position of the objects etc, as well as rigged joints (i.e. bones) of the object. Examples of objects in a keyframe include a person, animal, flora, tools etc. The rigged joints of an object will vary depending on the object. Properties of different rigged joints may be selected differently depending on the animation being generated, for example the upper body rigged joints in a person mining with a pickaxe' animation will typically vary more than the lower body rigged joints between different variants of this animation.

Optionally, the method may further comprise determining a duration of the audio signal; and selecting a duration of the animation to match the duration of the audio signal. In this way, the animation is generated in such a way such that it is synchronised with the audio signal.

Optionally, generating the animation comprises: generating a first keyframe, where a property of the first keyframe is selected based on the determined audio property; and generating the animation using the first keyframe.

The first keyframe being generated based on the audio property of the audio signal means that the first keyframe (and the animation generated using the first keyframe) will correspond to the audio signal, and that this is achieved without an animator having to manually define the first keyframe. Typically, generating the animation using the first keyframe means the animation comprises the first keyframe.

Generating the first keyframe may comprise modifying a property of an existing keyframe. In this way, a keyframe for an existing animation can be adjusted to generate a new keyframe for a new animation corresponding to a different gameplay event, thereby facilitating generation of high-quality animations without requiring memory resources to permanently store them.

The existing keyframe may be a keyframe of an animation for a related gameplay event. The related gameplay event is a different gameplay event related to the gameplay event for which an animation is being generated. Related gameplay events correspond to similar audio signals and animations. For example, a character walking, jogging, and running are three related gameplay events with similar corresponding audio signals and animations. Ajogging animation may be more easily modified (i.e. less modification and processing required) to provide a high-quality running animation, when compared to generating a running animation by modifying a sword swinging animation.

Generating the first keyframe may comprise: obtaining a related audio signal corresponding to the related gameplay event; determining an audio property of the related audio signal; comparing the audio property of the related audio signal to the audio property of the audio signal to determine audio property differences between the audio signal and the related audio signal; modifying a property of the existing keyframe based on the determined audio property differences.

Types of properties of the existing keyframe may be the same as those described above in relation to properties of a keyframe in an animation. For example, the position of different objects within the keyframe and of different rigged joints of the different objects.

As well as properties of the existing keyframe, or as an alternative, other properties of the existing animation may also be modified based on the determined audio property differences. The types of properties of the existing animation may be the same as those described above in relations to properties of an animation such as animation duration, number of keyframes, timing of keyframes etc.

The method may further comprise determining a frequency and/or amplitude of the audio signal; and selecting a property of an object in the first keyframe based on the determined frequency and/or amplitude of the audio signal.

In this way, the variety, consistency, and quality of generated animations can be further increased by accounting for the frequency and/or amplitude of the audio signal. For example, audio signals corresponding to a character being damaged may vary in frequency and/or amplitude depending on the amount of damage received. In this example, the animation corresponding to a character being damaged may be generated to also vary in magnitude based on the frequency and/or amplitude of the audio signal - a larger "flinching" animation could be generated based on a higher amplitude audio signal.

The method may further comprise determining a localisation of the audio signal; and selecting a directionality of an object in the first keyframe based on the determined localisation of the audio signal.

Localisation of the audio signal refers to whether the represented sound is directional. That is, whether it is perceived by the listener as originating from a specific point or direction. In this way, the variety, consistency, and quality of generated animations can be further increased by accounting for the localisation of the audio signal. For example, audio signals corresponding to a character being damaged may have different localisation properties depending on the direction from which the character receives damage. In this example, the animation corresponding to a character being damaged may be generated to also vary in direction based on the localisation of the audio signal. A specific example may be when an audio signal with left-of-character localisation leads to generation of an animation where the character is knocked to the right.

Selecting a property or directionality of an object may also refer to modifying the property or directionality of an object in an existing keyframe.

The first keyframe may be generated to coincide with the highest amplitude point of the audio signal. The highest amplitude point of the audio signal typically corresponds to an important part of a corresponding animation, therefore it is beneficial to generate a keyframe to coincide with this point. This has been found to be particularly advantageous when generating an animation for a gameplay event when the gameplay event is an impact event (i.e. two objects impacting each other).

The first keyframe may be an end keyframe of the animation. In this way, the audio signal and corresponding generated animation may be synchronised more easily with less computing resources required.

Optionally, generating the animation comprises: generating a second keyframe, where a property of the second keyframe is selected based on the determined audio property, and where the second keyframe is at a different time in the animation to the first keyframe; and generating the animation using the first keyframe and the second keyframe.

Generating the animation may further comprise generating at least one in-between frame by interpolating between the first keyframe and the second keyframe. As the first and second keyframes are generated based on determined audio properties of the audio signal, the interpolated in-between frames will also correspond (at least to some extent) to the audio signal.

Generating the animation may comprise applying a trained machine learning model to the audio signal and the audio property of the audio signal, wherein the trained machine learning model is configured to output the animation for the gameplay event from the audio signal and the audio property. The trained machine learning model may be configured to perform any elements of generating the animation as described above, for example selecting a property of the animation, generating a first keyframe, and modifying a property of an existing keyframe. Input to the trained machine learning model includes the audio signal and, optionally, the audio property. The audio property of the audio signal may be determined by trained machine learning model from the audio signal input, or may be determined separately and input to the trained model.

The trained model may be further configured to output the animation for the gameplay event from the audio signal, the audio property, and an existing animation or keyframe. Such trained models use the existing animation or keyframe as input in addition to the audio signal and, optionally, the audio property of the audio signal.

Preferably, the trained machine learning model is a generative adversarial network.

In a second aspect of the invention, there is provided a system for generating an animation for a gameplay event during gameplay, the system comprising: a determining unit configured to determine a gameplay event during gameplay; an obtaining unit configured to obtain an audio signal corresponding to the gameplay event; wherein the determining unit is further configured to determine an audio property of the audio signal; the system further comprising: a generating unit configured to generate an animation for the gameplay event based on the determined audio property of the audio signal; an output unit configured to output the audio signal and generated animation.

It will be appreciated that the optional and preferable features described above in relation to the first aspect also apply to the second aspect, along with the associated advantages.

In a third aspect of the invention, there is provided a system for generating an animation for a gameplay event during gameplay, wherein the system is configured to perform a method according to the first aspect.

In a fourth aspect of the invention, there is provided a computer program comprising instructions which, when executed by a processor, cause the processor to perform a method according to the first aspect.

In a fifth aspect of the invention, there is provided a non-transitory storge medium storing instructions which, when executed by a processor, cause the processor to perform a method according to the first aspect.

### BRIEF DESCRIPTION OF DRAWINGS

Embodiments of the invention are described below, by way of example only, with reference to the accompanying drawings, in which:
Figure 1 is a flow chart of a method in accordance with an embodiment of the invention;
Figures 2A and 2B schematically illustrate example keyframes generated in accordance with an embodiment of the invention; and
Figures 3A and 3B schematically illustrate further example keyframes generated in accordance with an embodiment of the invention.

### DETAILED DESCRIPTION

In video games and virtual environments, virtual objects such as characters act and react to their environment. They also interact with other characters in an audio-visual capacity. Typically, this is attained by animation and sound effects that escort the animations. For example, a character waving a sword, launching a fireball, laughing, taking damage and so on. In prior art methods, the common approach is to manually create one sound effect per animation or several animations that map to several sound effects. Providing a greater quantity and variety of sound effects and animations is a typical goal of video game and virtual environment development, in order to increase perceptual realism in terms of audio-visual cohesion and fidelity. However, the more sound effects and animations included the more time and resources required to create them, and the greater the amount of computer-memory needed to store them for service. The principle of the present invention is that, rather than manually creating animations and synchronising them with sound effects, instead the sound effect (i.e. an audio signal) is analysed and an animation is automatically generated in real time (i.e. during gameplay) based on an audio property of the audio signal. This reduces the number of animations needed to be manually created and reduces the memory resources required to store the animations. The invention may be implemented in a number of different ways.

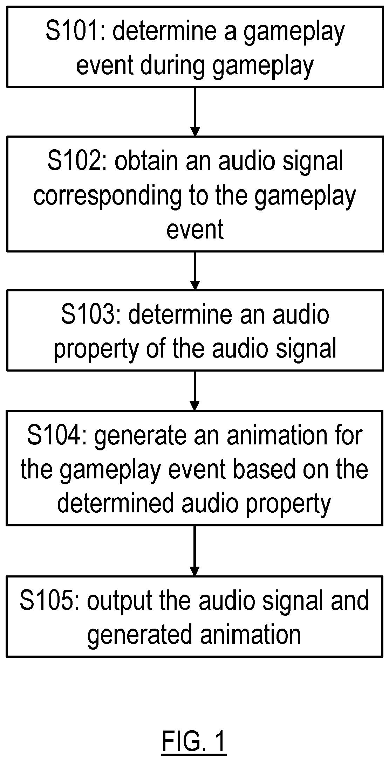

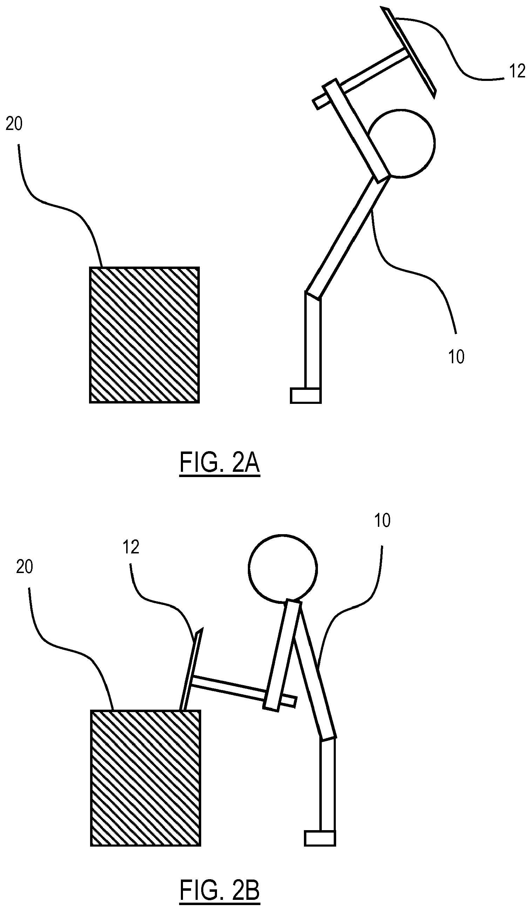

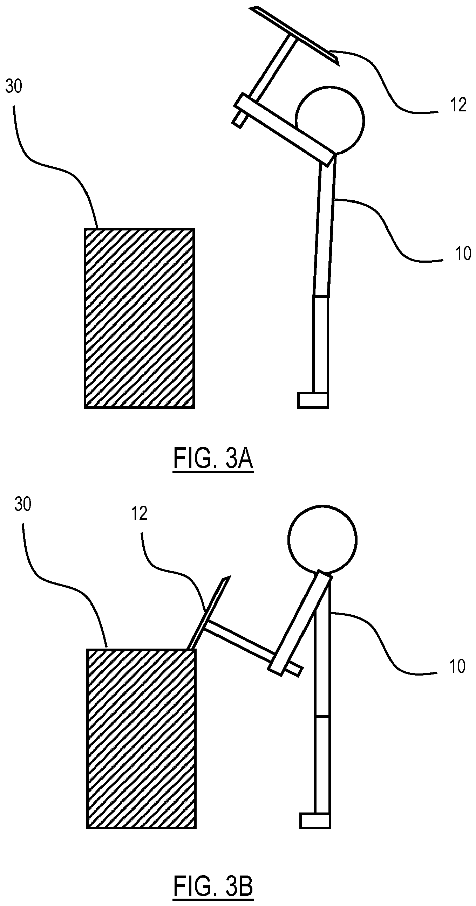

Figure 1 schematically illustrates a computer-implemented method for generating an animation for a gameplay event during gameplay according to the present invention. Figures 2A, 2B, 3A, and 3B schematically illustrate example keyframes generated in accordance with an embodiment of the invention and will be referenced as examples during the following description of the method of Figure 1.

The method comprises a first step S101 of determining a gameplay event during gameplay. The gameplay event being determined during gameplay means this step is performed in run-time, while the game is being played. The determining may be reactive (e.g. in response to a player input or other gameplay event) or proactive based on possible or expected upcoming gameplay events. A gameplay event shown in Figures 2A and 2B is a character 10 mining a first material 20 with a pickaxe 12. Another, related, gameplay event shown in Figures 3A and 3B is the character 10 mining a second material 30 with the pickaxe 12. To demonstrate different animations generated using the present methods, the second material 30 is softer than the first material 20.

The second step S102 of the method is the obtaining of an audio signal corresponding to the gameplay event. For example, an audio signal corresponding to the gameplay event of Figures 2A and 2B may include the sound of the pickaxe 12 moving through the air and striking the first material 20. Similarly, an audio signal corresponding to the gameplay event of Figures 3A and 3B may include the sound of the pickaxe 12 moving through the air and striking the second material 30.

In the third step S103, an audio property of the audio signal is determined. The audio property may be a property of the audio waveform itself such as frequency, amplitude, timbre, duration, decay time etc. As the first material 20 is harder than the second material 30, it is determined that both the amplitude and frequency of the audio signal corresponding to the gameplay event of Figures 2A and 2B are greater than the amplitude and frequency of the audio signal corresponding to the gameplay event of Figures 3A and 3B. That is, the audio signal associated with Figures 2A and 2B (the pickaxe 12 striking the first material 20) is louder and higher pitched than the audio signal associated with Figures 3A and 3B (the pickaxe 12 striking the second material 30). The audio property could also be information, such as a tag or metadata, describing the audio signal as the audio type or localisation of the audio signal. The audio type describes the type of gameplay event the audio signal corresponds to; this assists generating a high quality animation based on the audio property. In Figures 2A, 2B, 3A, and 3B the audio type might be "mining", "pickaxe impact" or similar. Other examples of audio types may include movement, footsteps, receiving damage, and horse riding etc.

The method comprises a fourth step S104 of generating an animation for the gameplay event based on the determined audio property. This step may be performed in a variety of ways.

In one example, an animation and audio signal corresponding to Figures 2A and 2B already exists and the animation has a keyframe shown in Figure 2A and another keyframe shown in Figure 2B. The gameplay event of Figures 2A and 2B is related to the gameplay event of Figures 3A and 3B, so the audio signal associated with Figures 2A and 2B (herein the "related audio signal") is related to the audio signal associated with Figures 3A and 3B (herein the "audio signal"). Audio properties of the related audio signal and the audio signal can be compared to determine audio property differences between the audio signal and related audio signal. As mentioned above, it is determined that the amplitude and frequency of the related audio signal are both greater than the amplitude and frequency of the audio signal. Based on these differences it is also determined that the second material 30 requires less force to mine than the first material 20, and so the animation corresponding to the gameplay event of Figures 2A and 2B should be modified to generate an appropriate animation for the gameplay event of Figures 3A and 3B. Therefore, the existing keyframe(s) of Figures 2A and 2B can be modified to generate new keyframe(s) for the gameplay event of Figures 3A and 3B. For example, the keyframes of Figures 3A and 3B were generated by reducing the range of motion in the keyframes of Figures 2A and 2B. These new keyframes are used to generate the animation for the gameplay event of Figures 3A and 3B, for example by interpolating between the keyframes of Figure 3A and Figure 3B to generate in-between frames. The number of in-between frames generated may be determined based on the duration of the audio signal, thereby defining the speed of the mining animation and ensuring it is synchronised with the audio signal.

In another example, each of the animations and keyframes of Figures 2A, 2B, 3A, and 3B are generated based on an existing animation such as a keyframe from a template mining animation.

Using these methods, distinct new animations can be generated during gameplay by modifying a single existing animation based on the audio properties of different audio signals.

In some examples of the invention, the generating in step S104 is performed using a trained machine learning model such as a generative adversarial network. In particular, an audio signal corresponding to a gameplay event and/or the audio property of the signal may be input to the trained model where the model is trained to output the animation for the gameplay event based on the audio signal and/or the audio property. The machine learning model may be trained using a library of audio signals and associated animations corresponding to gameplay events, where an audio signal corresponding to a gameplay event is used as the input and the animation for the gameplay event is used as the intended output.

In the fifth step S105, the audio signal and the generated animation are output. Outputting the audio signal and the corresponding generated animation should be timed so they are correctly synchronised. For example, so the sound of the pickaxe 12 moves through the air is audible during the portion of the animation where the pickaxe 12 moves through the air, and that the impact sound is audible from when the pickaxe 12 strikes the first material 20 or the second material 30.

Though a mining gameplay event was used above as a reference to describe an example of the invention, it will be appreciated that the methods are not limited to the examples described above. Other examples of gameplay events, audio signals, and generated animations are provided below.

A character swinging a dagger will be escorted by a different audio signal to a character swinging a longsword in order to be physically realistic. Similarly, these two gameplay events will require that their corresponding animations also portray different forces at in action. The sound of a dagger moving through the air will be auditorily lighter (e.g. higher frequency) than a heavy longsword; this audio property difference can be exploited to generate different animations which reflect the difference in weight of the two weapons.

An audio signal corresponding to a sequence of footsteps can be used to generate the associated animation of a character walking. In one example, a normal walking animation may be generated where the footsteps are synchronised with the footsteps in the audio signal. In another example, if every other footstep is auditorily louder and "heavier", this implies the character is walking with a limp and an animation can be generated where the character is limping.

A further example may relate to an audio signal corresponding to a character taking damage. In video games, a character taking damage is often accompanied by a "take damage" animation where the character will flinch away from or buckle around the source of the damage. The direction of this source will be described in the localisation of the audio signal and can be used to generate an animation that accounts for this localisation and represents it by providing corresponding directionality in the generated animation. For example, if the audio signal corresponds to character takes damage from a source to their right, the generated animation will represent the character flinching to the left, away from the damage source. The localisation may be determined from the waveform (e.g. if the waveform is different depending on from where the damage was received) or from information associated with the audio signal such as metadata or a tag that states the damage was received from a particular direction. The amplitude of the audio signal can similarly be accounted for so that the magnitude of the animation (e.g. the extent of the characters movement) is commensurate with the audio signal.

Having described aspects of the disclosure in detail, it will be apparent that modifications and variations are possible without departing from the scope of aspects of the disclosure as defined in the appended claims. As various changes could be made in the above methods and products without departing from the scope of aspects of the disclosure, it is intended that all matter contained in the above description and shown in the accompanying drawings shall be interpreted as illustrative and not in a limiting sense.

## Claims

1. A computer-implemented method for generating an animation for a gameplay event during gameplay, the method comprising:
determining a gameplay event during gameplay;
obtaining an audio signal, wherein the audio signal corresponds to the gameplay event;
determining an audio property of the audio signal;
generating an animation for the gameplay event based on the determined audio property of the audio signal; and
outputting the audio signal and generated animation.

2. The method of claim 1, wherein generating the animation comprises selecting a property of the animation, where the property of the animation comprises: duration of the animation, number of keyframes in the animation, timing of keyframes in the animation, and/or a property of a keyframe in the animation.

3. The method of claim 2, further comprising determining a duration of the audio signal; and
selecting a duration of the animation to match the duration of the audio signal.

4. The method of any preceding claim, wherein generating the animation comprises:
generating a first keyframe, where a property of the first keyframe is selected based on the determined audio property; and
generating the animation using the first keyframe.

5. The method of claim 4, wherein generating the first keyframe comprises modifying a property of an existing keyframe.

6. The method of claim 5, wherein the existing keyframe is a keyframe of an animation for a related gameplay event, and wherein generating the first keyframe comprises:
obtaining a related audio signal corresponding to the related gameplay event;
determining an audio property of the related audio signal;
comparing the audio property of the related audio signal to the audio property of the audio signal to determine audio property differences between the audio signal and the related audio signal;
modifying a property of the existing keyframe based on the determined audio property differences.

7. The method of any of claims 4 to 6, further comprising determining a frequency and/or amplitude of the audio signal; and
selecting a property of an object in the first keyframe based on the determined frequency and/or amplitude of the audio signal.

8. The method of any of claims 4 to 7, further comprising determining a localisation of the audio signal; and
selecting a directionality of an object in the first keyframe based on the determined localisation of the audio signal.

9. The method of any of claims 4 to 8, wherein the first keyframe is generated to coincide with the highest amplitude point of the audio signal.

10. The method of any preceding claim, wherein the first keyframe is an end keyframe of the animation.

11. The method of any of claims 4 to 10, wherein generating the animation comprises:
generating a second keyframe, where a property of the second keyframe is selected based on the determined audio property, and where the second keyframe is at a different time in the animation to the first keyframe; and
generating the animation using the first keyframe and the second keyframe; and optionally,
wherein generating the animation comprises generating at least one in-between frame by interpolating between the first keyframe and the second keyframe.

12. The method of any preceding claim, wherein the audio property of the audio signal comprises: frequency, amplitude, timbre, duration, audio type, and/or localisation of the audio signal.

13. The method of any preceding claim, wherein generating an animation comprises applying a trained machine learning model to the audio signal and the audio property of the audio signal, wherein the trained machine learning model is configured to output the animation for the gameplay event from the audio signal and the audio property.

14. The method of claim 13 when dependent on at least claim 5, wherein generating the animation further comprises applying the trained machine learning model to the existing keyframe, wherein the trained machine learning model is configured to output the animation for the gameplay event from the audio signal, the audio property of the audio signal, and the existing keyframe.

15. A system for generating an animation for a gameplay event during gameplay, the system comprising:
a determining unit configured to determine a gameplay event during gameplay;
an obtaining unit configured to obtain an audio signal corresponding to the gameplay event;
wherein the determining unit is further configured to determine an audio property of the audio signal;
the system further comprising:
a generating unit configured to generate an animation for the gameplay event based on the determined audio property of the audio signal;
an output unit configured to output the audio signal and generated animation.
